# EUROPÄISCHE PATENTSCHRIFT

(11) **EP 2 929 208 B1**
(45) Veröffentlichungstag und Bekanntmachung des Hinweises auf die Patenterteilung: **18.04.2018**
(21) Anmeldenummer: 13799216.0
(22) Anmeldetag: 02.12.2013
(51) Int. Cl.: F16D 65/097

(54) **SCHEIBENBREMS- UND NIEDERHALTEFEDER EINER SOLCHEN SCHEIBENBREMSE**
DISC BRAKE AND A HOLD-DOWN SPRING FOR SUCH A DISC BRAKE
FREIN À DISQUE ET RESSORT DE RETENUE D'UN TEL FREIN À DISQUE

(30) Priorität: 05.12.2012 DE 102012023813
(43) Veröffentlichungstag der Anmeldung: 14.10.2015
(73) Patentinhaber: Wabco Radbremsen GmbH, 68229 Mannheim (DE)
(72) Erfinder: KLOOS, Eugen, 68519 Viernheim (DE)
(74) Vertreter: Leinweber & Zimmermann
(86) Internationale Anmeldenummer: PCT/EP2013/003631
(87) Internationale Veröffentlichungsnummer: WO 2014/086474

(56) Entgegenhaltungen:
- EP-A2- 0 694 707
- EP-A2- 1 452 765
- DE-B3-102006 023 964
- DE-T2- 69 816 175

## Beschreibung

Die Erfindung betrifft eine Scheibenbremse, insbesondere für Nutzfahrzeuge, mit einer Andruckeinrichtung, die zum Bremsen gegen eine Bremsscheibe gedrückt wird, einer Niederhaltefeder in Form einer Blattfeder, die die Andruckeinrichtung niederhält, und einem zwei Stäbe aufweisenden Niederhaltebügel, der die Niederhaltefeder gegen die Andruckeinrichtung vorspannt, wobei die Niederhaltefeder bezüglich ihrer Querebene symmetrisch ausgestaltet ist und zwei Federschenkel sowie zwischen den beiden Federschenkeln einen (bezüglich der Querebene symmetrischen) Mittelbereich aufweist, der sich nach radial außen (formschlüssig) zwischen die beiden Stäbe des Niederhaltebügels erstreckt, die beiden Federschenkel jeweils eine Öffnung aufweisen, in die sich je ein Ansatz an der Andruckeinrichtung erstreckt, die Federschenkel jeweils einen ersten Bereich, an dem jeweils ein Stab des Niederhaltebügels niederhaltend anliegt, und einen zweiten Bereich aufweisen, der niederhaltend an der Andruckeinrichtung anliegt, und die ersten Bereiche der Federschenkel im Ruhezustand mit Abstand von der Andruckeinrichtung gehalten sind.

Eine solche Scheibenbremse ist bekannt, beispielsweise aus der DE 10 2006 023 964 B3. Zum weiteren Stand der Technik wird verwiesen auf die EP 694 707 B3 sowie auf die deutsche Patentanmeldung 10 2011 115 304 vom 29. September 2011.

Die DE 698 16 175 T2 zeigt eine Scheibenbremse, bei der eine in unbelastetem Zustand gestreckte Feder dadurch an der Rückenplatte eines Bremsbelags angebracht wird, daß sie mit entsprechenden Öffnungen über Laschen gestülpt wird und die Außenkanten der Öffnungen in Nuten der Laschen gestützt werden. Dadurch bekommt die Feder eine insgesamt bogenförmig gespannte Form. Wegen der inneren Elastizität der Feder stützt sie sich zum einen in den Nuten und zum anderen nach radial außen an den Laschen ab. Wird dann ein Niederhaltebügel von radial außen in Rastabschnitten angebracht, so liegt die Feder in Bereichen niederhaltend an der Rückenplatte an, die zwischen den Laschen bzw. den Öffnungen einerseits und den Rastabschnitten andererseits liegen. Jenseits der Laschen bzw. Öffnungen liegt sie nicht niederhaltend an der Rückenplatte an, sondern nur in der genannten Nut und nach radial außen gerichtet, weil ihre elastische Rückstellkraft in diese Richtung wirkt.

Bei einschlägigen Scheibenbremsen sind in der Regel die Rückenplatte, der Niederhaltebügel und die Niederhaltefeder jeweils bezüglich ihrer Mittelebene symmetrisch ausgebildet. Dadurch werden Fehleinbauten und Verwechslungen vermieden.

Bei der Andruckeinrichtung kann es sich erfindungsgemäß nicht nur um einen Bremsbelag mit Rückenplatte und Reibbelag handeln, sondern auch um eine Druckplatte bzw. Druckverteilerplatte, die biegesteif ausgelegt ist, um eine Druckverteilung über eine möglichst große Fläche der Rückenplatte auch im Hinblick darauf zu gewährleisten, daß die Rückenplatte nicht übermäßig dick und daher nicht ausreichend biegesteif ausgeführt sein kann.

Unter einem Ruhezustand wird erfindungsgemäß ein Zustand verstanden, in dem die Bremsscheibe steht und die Bremse unbetätigt ist. Da der Niederhaltebügel eine Vorspannung auf die Niederhaltefeder ausübt, steht die Niederhaltefeder in dem genannten Ruhezustand unter Teillast.

Bei einer mit einer Belaghalterung versehenen Scheibenbremse werden zur Positionierung der beiden beidseitig der Bremsscheibe in Schachtführungen des Bremssattels bzw. Bremsenträgers angeordneten Bremsbeläge (bestehend aus Reibbelag und Metallrückenplatte) jeweils Niederhaltefedern verwendet, wobei die jeweilige Niederhaltefeder auf einem oberen und einer Montageöffnung des Bremssattels zugewandten Randbereich des Bremsbelags längserstreckend gelagert ist. Sie wird über einen die Montageöffnung in Achsrichtung der Bremsscheibe überspannenden und an den Bremssattelhälften befestigten Niederhaltebügel unter Vorspannung gehalten. Der Niederhaltebügel verläuft somit quer zur längs verlaufenden Niederhaltefeder. Sind die Beläge eingebaut und ist die Feder über den Niederhaltebügel verspannt, befindet sich die Niederhaltefeder in dem oben bereits erwähnten Teillastbereich.

Dabei ist der Bremsbelag über seinen unteren Randbereich radial nach innen und über die beidseitigen Randbereiche in Umfangsrichtung im Führungsschacht gelagert bzw. abgestützt. Der Bremsbelag ist in der Schachtführung mittels einer Zuspanneinrichtung axial (in beiden Richtungen) verschiebbar. Die Zuspanneinrichtung kann im Bremssattel angeordnet sein.

Da bei Nutzfahrzeugscheibenbremsen großvolumige Bremsbeläge mit entsprechendem Gewicht eingesetzt werden, werden zur Bedämpfung und zur Lagepositionierung vorrangig Blattfedern eingesetzt. Die Auslegung der Blattfedern, d.h. die von ihnen aufzubringende Federkraft, erfolgt entsprechend der Größe und dem Gewicht des jeweiligen Bremsbelages. Der Kontaktbereich - also der Ort zur Einbringung der Federkraft auf den Bremsbelag - ist entscheidend für die Funktionalität des gesamten Niederhaltesystems. Ferner ist von entscheidender Bedeutung die Dauerbelastbarkeit der Niederhaltefeder, d.h. wie sie sich unter Extrembedingungen im Feldeinsatz über ihre Lebensdauer bzw. über einen Belagaustauschzyklus verhält.

Scheibenbremsen für Nutzfahrzeuge sind häufig extremen Bedingungen ausgesetzt. Dies gilt beispielsweise für Schlechtwegstrecken, bei denen Beschleunigungen bis zu 26 g auftreten. Unter diesen Bedingungen hebt die Rückenplatte des Bremsbelages von der unteren und radial wirkenden Schachtführung ab und schlägt nach radial außen gegen die Niederhaltefeder. Der Zustand des maximalen radialen Ausschlages des Bremsbelages stellt den Volllast-Zustand der Niederhaltefeder dar.

Bei herkömmlichen Scheibenbremsen hebt im Volllast-Zustand der zweite Bereich der Federschenkel, also derjenige Bereich, der die Andruckeinrichtung niederhalten soll, nach radial außen ab, so daß keine Federvorspannung mehr vorliegt. Dadurch besteht unter anderem die Gefahr, daß eine wirkungsvolle Federwirkung verloren geht. Darüber hinaus kann bei häufigem bzw. schnell aufeinanderfolgendem Auftreten des Volllastbereichs die Feder beeinträchtigt werden, was beispielsweise zu Deformierungen und Zerstörungen führen kann.

Ist die Niederhaltefeder durch entsprechend versetzte Anbringung des Niederhaltebügels wegen ihrer Formschlüssigkeit mit dem Niederhaltebügel mittels des radialen Mittenbereiches in Umfangsrichtung der Bremsscheibe versetzt in der Scheibenbremse angeordnet, um zur radialen Federvorspannung eine zusätzliche tangentiale Federvorspannung auf die Andruckeinrichtung zu erzeugen, treten bei den Scheibenbremsen nach dem Stand der Technik zusätzliche Schub- und Druckspannungen auf, die zu Materialermüdungen führen können. Dies erfolgt insbesondere im L-förmigen Übergangsbereich der Formschlüssigkeit zum diesseits angrenzenden Federschenkel.

Der Erfindung liegt die Aufgabe zugrunde, bei Scheibenbremsen der eingangs genannten Art eine optimale Bedämpfung sicherzustellen, und zwar auch im Volllastbereich und im Dauerbetrieb. Dies soll insbesondere ohne größeren Eingriff in den Aufbau der Scheibenbremse erfolgen, und zwar möglichst indem nur die Niederhaltefeder modifiziert wird, nicht aber andere Bauteile der Bremse. Die Federschenkel verlaufen von dem ersten Bereich zu dem zweiten Bereich hin zunächst nach radial außen. Dadurch ist auch in Extremsituationen und im Volllastbereich sichergestellt, daß die zweiten Bereiche der Federschenkel, also diejenigen Bereiche, die die Federvorspannung auf die Andruckeinrichtung ausüben, nicht abheben. Deformierungen und Zerstörungen ist vorgebeugt. Das gleiche gilt für die oben beschriebenen Schub- und Druckspannungen bei außermittiger Anordnung der Niederhaltefeder. Weiterhin umgibt die Niederhaltefeder die beiden Stäbe des Niederhaltebügels jeweils trogförmig. wobei die beiden ersten Bereiche der Federschenkel den jeweiligen Boden des Troges bilden. Dadurch ist eine besonders verläßliche Halterung der Niederhaltefeder bei gleichzeitiger Lösung der oben genannten Probleme sichergestellt. Erfindungsgemäß ist dabei der Trog nicht symmetrisch. Während die Wandhöhe des Troges auf der Seite des Mittelbereiches in etwa dem Durchmesser des Niederhaltebügels entspricht, ist sie auf der dem Mittelbereich abgewendeten Seite niedriger, beispielsweise maximal halb so hoch, um dem Federschenkel und insbesondere seinem freien Ende genügend Bewegungsfreiraum entsprechend dem Belastungsfall zu ermöglichen.

Weiter bevorzugt ist vorgesehen, daß die zweiten Bereiche jeweils zumindest teilweise auf den den ersten Bereichen abgewandten Seiten der Öffnungen liegen. Mit anderen Worten liegen sie von dem Mittelbereich aus gesehen jenseits der Öffnungen, also im Endbereich der beiden Federschenkel, wodurch eine optimale Hebelwirkung erhalten wird.

Weiter bevorzugt ist es erfindungsgemäß vorgesehen, daß die Öffnungen länger sind als die Ansätze. Dadurch ist gewährleistet, daß sich die Andruckeinrichtung in Umfangsrichtung bezüglich der Niederhaltefeder verstellen kann, was in bestimmten Betriebssituationen zum Ausgleich vorteilhaft sein kann.

Nach einer weiter bevorzugten Ausführungsform der Erfindung ist die Niederhaltefeder in eingebautem Zustand bezüglich der Andruckeinrichtung in Umfangsrichtung der Bremsscheibe versetzt.

Dieser Versatz ist vorteilhafterweise bei Vorwärtsfahrt in Scheibenauslaufrichtung realisiert.

Die zweiten Bereiche der beiden Federschenkel liegen erfindungsgemäß weiter bevorzugt am jeweiligen freien Ende der Federschenkel. Dadurch ist eine optimale Bedämpfung über die ganze Länge des Federschenkels realisiert. Weiterhin liegen sie damit vorteilhaft nahe der Rückenplattenbreite auf.

Wie bereits oben angedeutet, ist es weiterhin erfindungsgemäß bevorzugt, daß die Andruckeinrichtung in einem Schacht nach radial innen und in Umfangsrichtung abgestützt ist.

Neben der oben im einzelnen beschriebenen Scheibenbremse schafft die Erfindung auch eine Niederhaltefeder für eine solche Scheibenbremse, die insbesondere dazu ausgelegt ist, ohne weitere Modifikationen der Scheibenbremse. Ferner ist es erfindungsgemäß bevorzugt, daß die zweiten Bereiche am jeweiligen Ende der Federschenkel liegen.

Die zweiten Bereiche liegen erfindungsgemäß weiter bevorzugt jeweils zumindest teilweise auf den den ersten Bereichen abgewandten Seiten der Öffnung.

Schließlich ist es erfindungsgemäß bevorzugt vorgesehen, daß die Öffnungen länger sind als die Ansätze.

Im folgenden sind der Stand der Technik, die sich daraus ergebenden Probleme sowie die erfindungsgemäße Lösung unter Bezugnahme auf die beiliegende Zeichnung mit weiteren Einzelheiten näher erläutert. Dabei zeigen
- Figur 1: eine Draufsicht auf eine Scheibenbremse,
- die Figuren 2 und 3: axiale Teilansichten einer herkömmlichen Scheibenbremse mit mittiger Einbaulage einer Niederhaltefeder im Teilbzw. Volllastbereich,
- die Figuren 4 und 5: die gleichen Ansichten wie die Figuren 2 bzw. 3, jedoch von einem Ausführungsbeispiel der Erfindung,
- die Figuren 6 und 7: die gleichen Teilansichten einer herkömmlichen Scheibenbremse wie nach den Figuren 2 und 3, jedoch mit in Umfangsrichtung versetztem Niederhaltebügel,
- die Figuren 8 und 9: die gleichen Ansichten wie nach den Figuren 2 und 3, jedoch von einem zweiten Ausführungsbeispiel der Erfindung, mit in Umfangsrichtung versetztem Niederhaltebügel,
- Figur 10: die gleiche Ansicht wie Figur 4, jedoch mit im Schnitt dargestellter Niederhaltefeder,
- Figur 11: den oberen Teil von Figur 10, jedoch in vergrößertem Maßstab, und
- Figur 12: die gleiche Ansicht wie Figur 4, jedoch auf der linken Seite im Zustand der Teillast und auf der rechten Seite ohne Niederhaltebügel und in entspanntem Zustand.

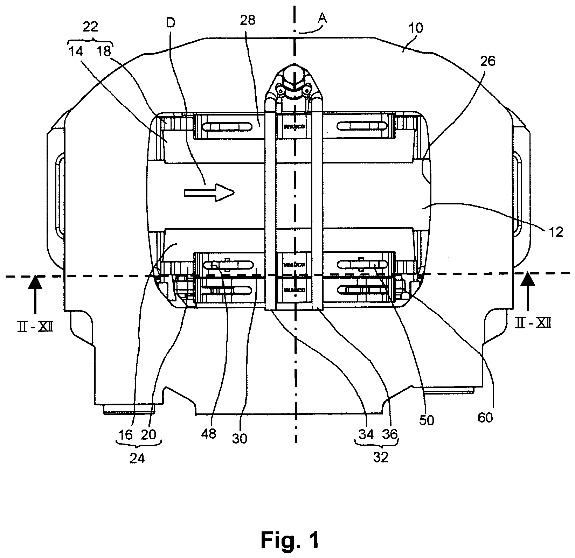

Figur 1 zeigt eine Draufsicht auf ein Ausführungsbeispiel der erfindungsgemäßen Scheibenbremse mit einem Bremssattel 10, der eine Bremsscheibe 12 umgreift. Beiderseits der Bremsscheibe sind in Schachtführungen aus Reibbelag 14, 16 und metallischer Rükkenplatte 18, 20 bestehende Bremsbeläge 22, 24 entlang einer Achse A der Bremsscheibe axial verschiebbar angeordnet, um mittels einer im Bremssattel 10 angeordneten und hier nicht dargestellten Zuspanneinrichtung bei einem Bremsvorgang aktiviert zu werden. Die Bremsbeläge 22, 24 sind hier sowohl radial einwärts als auch in Umfangsrichtung durch Schachtführungen der Bremse geführt bzw. abgestützt. Der Bremssattel 10 weist eine Radialöffnung/Montageöffnung 26 zum Ein-/Ausbau der Bremsbeläge 22, 24 auf. Die bevorzugte Drehrichtung der Bremsscheibe 12 bei Vorwärtsfahrt ist mit einem Pfeil D angedeutet. Diese Drehrichtung gilt auch für die nachfolgenden Figuren.

Wie bereits oben erläutert, ist jedem Bremsbelag 22, 24 eine Niederhaltefeder 28, 30 in Form einer Blattfeder zugeordnet, die auf dem oberen Randbereich der Rückenplatte gelagert ist. Die Lagerung ist weiter unten detaillierter erläutert. An dem Bremssattel 10 ist ein Niederhaltebügel 32 befestigt, der zwei Stäbe 34, 36 aufweist. Die Befestigung erfolgt beispielsweise mittels einer Verankerung und einer Verschraubung. Der Niederhaltebügel 32 verspannt und positioniert die Bremsbeläge 22, 24 in der Rahmen- bzw. U-förmigen Schachtführung.

Die nachfolgenden Beschreibungen beziehen sich auf Schnitte II-XII aus Figur 1, wobei die entsprechende Rückenplatte 20 in einem Teilausschnitt der Schachtführung gelagert und über die Teile Niederhaltebügel 32 und Niederhaltefeder 30 darin verspannt ist.

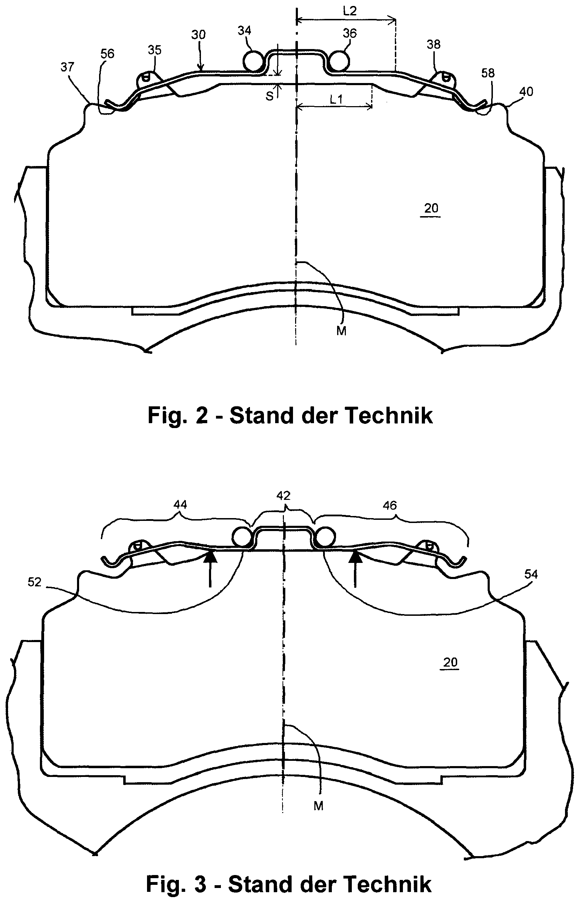

Figur 2 zeigt eine gattungsgemäße Rückenplatte 20 nach dem Stand der Technik in der Einbaulage mit einer Niederhaltefeder 30 im Teillastbereich. Die Rückenplatte 20 weist im oberen Randbereich mittig einen weitestgehend flach verlaufenden Bereich auf, der dann zu beiden Seitenbereichen schräg abfallend unter einem Winkel verläuft. Beidseitig einer Mittelachse M und außerhalb des flach verlaufenden Bereichs kragen jeweils zwei Ansätze 35, 37 bzw. 38, 40 aus.

Wie insbesondere Figur 3 zu entnehmen ist, weist die Niederhaltefeder 30 - wie alle anderen Niederhaltefedern auch - einen Mittelbereich 42 auf, der sich nach radial außen zwischen die beiden Stäbe 34, 36 des Niederhaltebügels 32 erstreckt, sowie zwei Federschenkel 44, 46. Die Radialerstreckung des Mittelbereiches zur Formschlüssigkeit geht im wesentlichen mit der Dimensionierung des Niederhaltebügels einher.

Die beiden mittigen Ansätze 35, 38 dienen der Halterung der Niederhaltefeder 30 und erstrecken sich in Durchgangsöffnungen (Figur 1) 48, 50 der beiden Federschenkel 44, 46. Die beiden äußeren Ansätze 37, 40 dienen als Kontaktanlagen der entsprechenden Enden der seitlichen Federschenkel 44, 46.

Die beiden Federschenkel 44, 46 weisen jeweils einen ersten Bereich 52, 54 auf, an dem ein Stab 34, 36 des Niederhalters 32 niederhaltend anliegt, und einen zweiten Bereich 56, 58, der niederhaltend an dem Bremsbelag 20 bzw. an dem jeweiligen äußeren Ansatz 37, 40 anliegt.

Da sowohl der Bremsbelag 20 als auch die Niederhaltefeder 30 bezüglich der Mittelachse M symmetrisch ausgestaltet sind, wird im folgenden der Einfachheit halber nur die rechte Seite in den Figuren 2 und 3 betrachtet.

Der flache Bereich der Oberseite der Rückenplatte 20 erstreckt sich über eine Länge L₁. Diese Kontur der Rückenplatte bleibt auch angesichts der durch die Erfindung neu geschaffenen Niederhaltefeder unverändert.

Der radial verlaufende Teil der Niederhaltefeder 30, der den Grenzbereich zwischen dem Mittelbereich 42 und dem Federschenkel 46 bildet, bildet zusammen mit dem sich daran anschließenden Teil des Federschenkels 46 in etwa eine L-förmige Anlagefläche für den Stab 36 des Niederhaltebügels 32. Die radiale Ausstülpung des Mittelbereichs 42 greift daher formschlüssig in den Niederhaltebügel 32 ein. Die Niederhaltefeder 30 wirkt in Teillast radial auf die Rückenplatte 20 ein. Damit ist die Niederhaltefeder 30 in Umfangsrichtung der Bremsscheibe 12 am ortsfesten Niederhaltebügel 32 festgelegt.

Im Teillastbereich nach Figur 2 weist der Federschenkel 46 einen annähernd flach verlaufenden Bereich der Länge L₂ auf, der in Richtung des zweiten Bereichs 58 über den oben genannten flachen Bereich der Länge L₁ der Rückenplatte 20 übersteht. Der Federschenkel verläuft daran anschließend zum bogenförmigen zweiten Bereich 58 hin schräg abfallend unter einem Winkel. Dadurch kann sich der Federschenkel 46 - je nach Einbaulage und Betriebszustand der Bremse - an der Anlaufschräge (Kontaktbereich) des äußeren Ansatzes 40 elastisch abstützen.

Dadurch, daß die beiden inneren Ansätze 35, 38 in die Durchgangsöffnungen 48, 50 eingreifen, ist die Niederhaltefeder 30 in Axialrichtung der Bremsscheibe 12 mit der Rükkenplatte 20 gekoppelt.

Dadurch, daß der bogenförmige zweite Bereich 58 des Federschenkels 46 auf den Randbereich der Rückenplatte 20 einwirkt, können im Teillastbereich beispielsweise erforderliche Bedämpfungen über die gesamte Länge des Federschenkels erzeugt werden.

Damit im normalen Fahrbetrieb eine relativ freie radiale Beweglichkeit der Rückenplatte 20 ohne Verlust der Federwirkung über die Federerstreckung erhalten bleibt, ist zwischen den ersten Bereichen 52, 54 der Federschenkel 44, 46 einerseits und der Rückenplatte 20 andererseits ein Abstand S eingehalten, der im Zusammenspiel mit einem ebenen Verlauf der Rückenplatte 20 im Mittelbereich und einem entsprechenden Verlauf der Niederhaltefeder 30 in diesem Bereich ein sogenanntes radiales Funktionsspiel ermöglicht. Mit anderen Worten werden die Niederhaltefeder 30 einerseits und die Rückenplatte 20 andererseits derart gehalten, daß sich die Rückenplatte 20 nach radial außen auf die Niederhaltefeder 30 zu bewegen kann, und zwar im Rahmen des genannten radialen Funktionsspiels.

Insbesondere bei Schlechtwegstrecken können Extrembedingungen mit Beschleunigungen bis zu 26 g auftreten. Hebt daraufhin die Rückenplatte 20 von der unteren Schachtführung ab, so schleudert sie gegen die ersten Bereiche 52, 54 der Federschenkel 44, 46. Wegen der in Figur 2 gezeigten Lagen der Bereiche mit den Längen L₁ und L₂ wirkt die Rückenplatte 20 mit einem Nebenhebelarm der Länge L₁ und erzeugt ein entsprechendes Nebenmoment in dem Federschenkel. Da der Kontaktpunkt am Ende von L₁ seitlich vom Niederhaltebügel 32 liegt (in Figur 3 mit Pfeilen dargestellt), wird der zweite Bereich (das Ende) 56, 58 des Federschenkel 44, 46 vom Kontaktsitz an der Rückenplatte 20 abgehoben. Dadurch geht nicht nur die Federwirkung über die gesamte Schenkellänge verloren. Es kann auch im schnellen und häufigen Wechsel vom Teil- zum Volllastbereich zu Materialbeeinträchtigungen der Niederhaltefeder 30, wie etwa Deformierung, Zerstörung usw. kommen.

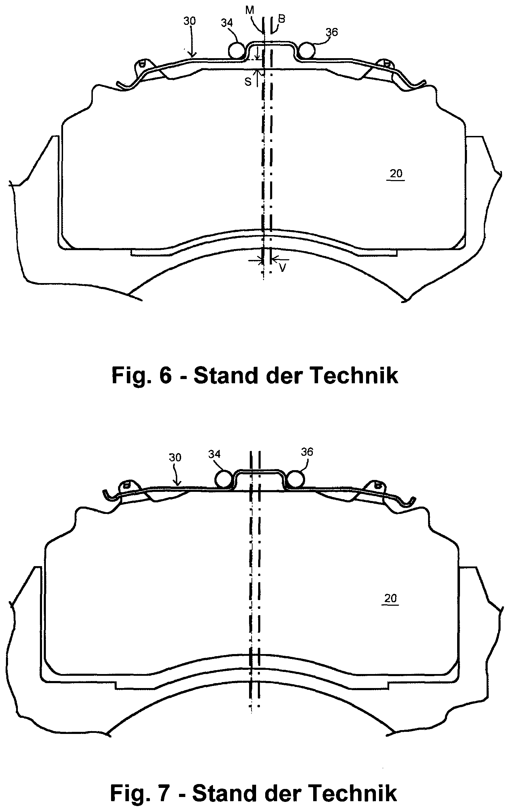

Insbesondere dann, wenn entsprechend den Figuren 6 und 7 der Niederhaltebügel 30 mit einer außermittigen Lagerung in Richtung zur Bremsscheibenauslaufseite bei Vorwärtsfahrt gegenüber den anderen beiden Teilen im Bremssattel angeordnet ist, um zusätzlich über die Niederhaltefeder 30 eine tangentiale Federvorspannung auf den Bremsbelag zu erzeugen, treten in den Anlagebereichen (L-förmiger Übergangsbereich) zusätzliche Schub- und Druckspannungen auf. Diese extremen Lastwechselzustände können zu Materialermüdungen führen. Eine Versatzachse ist mit B bezeichnet, der Versatz mit V.

Nach der Erfindung fehlt im Vergleich mit der herkömmlichen Federkontur der L-förmige unmittelbare Übergangsbereich. Er wird durch eine für den Niederhaltebügel gegenüber dem Beginn des Federschenkels tiefer liegende, als kombinierter Lager-/Gleitbereich ausgeformte bzw. längs wirkende Lagerung ersetzt. Durch die Formgebung als (längliche) Mulde bzw. als Trog wird zum einen der Beginn des Federschenkels nach radial außen verlegt. Zum anderen wird im Übergangsbereich zwischen dem seitlichen Radialansatz im Mittenbereich und zum Beginn des Federschenkels eine Entspannungszone zum Abbau/zur Reduzierung nachteiliger Spannungen eingefügt bzw. erzeugt. Dafür ist die Breite der Mulde bzw. des Troges geringfügig größer als der Querschnittsbereich des in diesem Bereich einliegenden Niederhaltebügels.

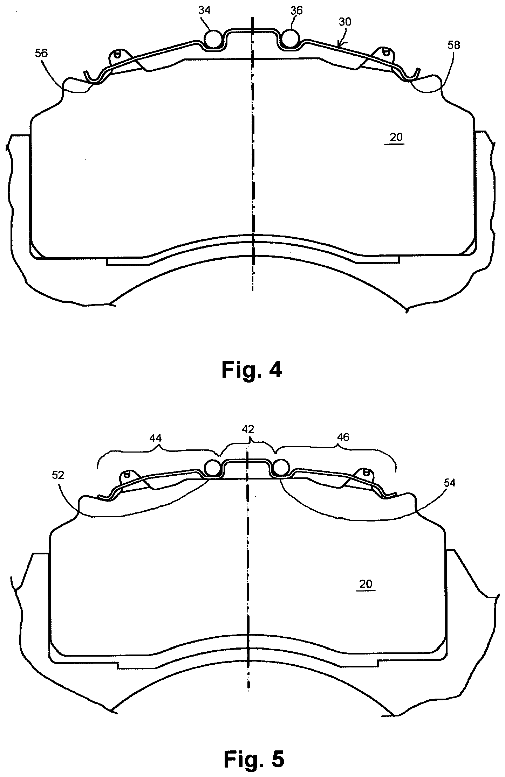

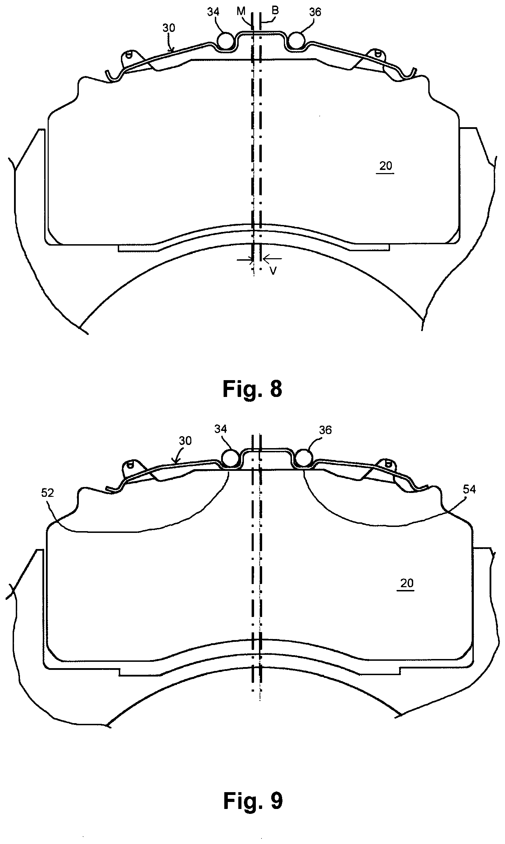

Durch diese neue Formgebung der Niederhaltefeder treten insbesondere im Volllastbereich, also nach Überwindung des Funktionsspiels S mehrere Vorteile auf, die in den Figuren 5 und 9 (ohne bzw. mit Mittenversatz des Niederhaltebügels) erkennbar sind.

Wird der Bremsbelag infolge der obigen Beschleunigungen nach radial auswärts gedrängt, schlägt der obere Randbereich der Rückenplatte 20 gegen den ersten Bereich 52, 54, der im Vergleich mit dem verschwenkbaren Teil des Federschenkels radial weiter innen liegt. Er ist mulden- bzw. trogförmig ausgestaltet und bildet einen Lagerbereich für den Niederhaltebügel 32 bzw. für einen Stab 34, 36 des Niederhaltebügels 32. Da der obere Randbereich der Rückenplatte 20 den Federschenkel 44, 46 außerhalb des ersten Bereichs 52, 54 berührt und ihn deshalb nicht anheben bzw. aushebeln kann, kommt es auch unter diesen Extrembedingungen zu keinem Kontaktverlust zwischen dem zweiten Bereich 56, 58 (Federschenkelende) und dem äußeren Ansatz 37, 40 der Rückenplatte 20. Somit bleibt die volle Federwirkung erhalten. Weiterhin können auch keine Materialdeformationen mehr auftreten, weil die Rückenplatte 20 nicht mehr den Federschenkel außerhalb der genannten Bereiche berührt. Ein nachteiliger Nebenhebelarm wie nach dem Stand der Technik kann sich nicht mehr einstellen.

Diese Federausführung bewirkt gerade bei einem Versatz des Niederhaltebügels 32 nach den Figuren 8 und 9 zur Erzeugung einer zusätzlichen Tangentialvorspannung noch weitere Vorteile.

Treten reversierende Bremsungen entgegen der bevorzugten Bremsrichtung mit seitlichen Bewegungen des Bremsbelages in der Schachtführung auf, so daß der Bremsbelag seitlich an einer Schachtwand anschlägt, so kann der dadurch gedrängte Federschenkel 46 über die Mulden-/Trogkontur sich an dem entsprechenden Stab des Niederhaltebügels (hier der rechte Stab 36) anlegen. Mit anderen Worten wird er dagegen gestaucht. Er kann bei Bremsentlastung über diese relative Formschlüssigkeit auch noch eine verbesserte, zusätzliche Schubwirkung über den diesseitigen Teil des Niederhaltebügels erzeugen. Somit kann sich bei Bremsende der gedrängte Federschenkel besser entlasten, um den Bremsbelag nicht nur radial, sondern wieder tangential (in Umfangsrichtung) in die richtige Schachtposition zu verspannen. Ferner werden wieder Schub- und Druckspannungen über die Muldenstruktur aufgenommen bzw. abgehalten. Nach dem Stand der Technik erfolgte diese Vorspannung einzig aus dem sich deformierenden L-förmigen Übergangsbereich.

Die neue Federform kann erfolgreich eingesetzt werden, und zwar sowohl bei einer mittigen als auch bei einer außermittigen Einbaulage des Niederhaltebügels im Bremssattel mit den sich daraus ergebenden Federvorspannungen wie radial oder radial und tangential entgegen dem Bremsbelag und dessen Führungsschacht.

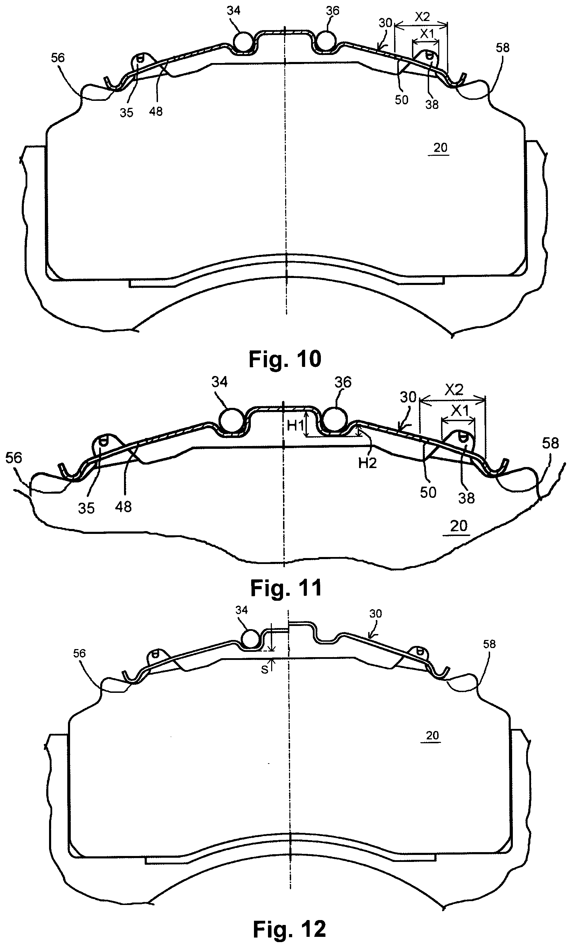

In Figur 10 ist die Niederhaltefeder 30 geschnitten dargestellt, so daß erkennbar ist, daß die Länge X2 der Öffnung 50 größer ist als die Länge X1 des Ansatzes 38. Wenngleich dies nur auf der rechten Seite von Figur 10 dargestellt ist, gilt es doch auch für die linke Seite, die insofern symmetrisch ist.

Durch die oben beschriebenen Unterschiede der Längen X1 und X2 kann die Niederhaltefeder 30 je nach Betriebszustand gestreckt oder gestaucht werden, ohne durch die Ansätze 35, 38 an entsprechenden Bewegungen gehindert zu sein. Mit anderen Worten schlagen die Ansätze 35, 38 nicht an den schmalseitigen Wänden der Öffnungen 48, 50 an. Die Federwirkung wird also immer endseitig der Federschenkel - also von der Mitte aus gesehen hinter den Ansätzen 35, 38 - eingeprägt, im Gegensatz zu der Lehre der DE 698 16 175 T2.

Figur 11 zeigt deutlich, daß die Niederhaltefeder 30 den Niederhaltebügel 34, 36 trogförmig umgibt. Dabei sind allerdings die Wände des jeweiligen Trogs nicht symmetrisch. Die Wandhöhe H1 an dem Mittelbereich entspricht in etwa dem Durchmesser des Niederhaltebügels, wohingegen die Wandhöhe H2 auf der anderen Seite knapp halb so groß ist. Dadurch hat der jeweilige Federschenkel und insbesondere sein freies Ende genügend Bewegungsfreiraum, um den einzelnen Belastungsfällen gerecht zu werden.

Figur 12 zeigt synoptisch zwei Federzustände. Links der Mittellinie ist der Zustand bei Teillast entsprechend der Darstellung nach Figur 4 dargestellt. Rechts der Mittellinie ist der Zustand ohne Niederhaltebügel und entspannt dargestellt. Die Niederhaltefeder 30 ist entsprechend Figur 12 im entspannten Zustand in ihrer seitlichen Erstreckung kürzer und höher, d.h. stärker gekrümmt, als wenn sie mittels des Niederhaltebügels verspannt wäre und unter Teillast in Richtung der Außenkontur der Rückenplatte verschoben ist.

Obwohl die neue Federkontur anhand einer Rückenplatte erläutert wurde, sei angemerkt, daß sie nicht nur vorrangig hierfür, sondern auch bei separaten Druckplatten bzw. Druckverteilerplatten erfindungsgemäß Anwendung finden kann, wenn nämlich bei Scheibenbremsen zwischen der Zuspanneinrichtung und dem diesseitigen Bremsbelag eine derartige Druckplatte mit Federvorspannung eingesetzt wird. Eine solche Druckplatte ist in Fig. 1 mit der Bezugszahl 60 bezeichnet.

Der oben erwähnte Abstand, aus dem das Funktionsspiel S resultiert, ist entsprechend den sonstigen Gegebenheiten geeignet zu wählen. Er hängt insbesondere von der Größe der Bremse und den zu erwartenden Bremskräften ab. Beispielsweise bei Bremsen für Räder mit einer Felgengröße von 17" bis 25" beträgt der Abstand mindestens 2 bis 4 mm.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Scheibenbremse, insbesondere für Nutzfahrzeuge, mit
einer Andruckeinrichtung (22, 24), die zum Bremsen gegen eine Bremsscheibe (12) gedrückt wird,
einer Niederhaltefeder (28, 30) in Form einer Blattfeder, die die Andruckeinrichtung niederhält, und
einem zwei Stäbe (34, 36) aufweisenden Niederhaltebügel (32), der die Niederhaltefeder gegen die Andruckeinrichtung vorspannt, wobei
die Niederhaltefeder
- bezüglich ihrer Querebene symmetrisch ausgestaltet ist und zwei Federschenkel (44, 46) sowie zwischen den beiden Federschenkeln einen Mittelbereich (42) aufweist, der sich nach radial außen (formschlüssig) zwischen die beiden Stäbe des Niederhaltebügels erstreckt,
- die beiden Federschenkel jeweils eine Öffnung (48, 50) aufweisen, in die sich je ein Ansatz (35, 38) an der Andruckeinrichtung erstreckt,
- die Federschenkel jeweils
- einen ersten Bereich (52, 54), an dem jeweils ein Stab des Niederhaltebügels niederhaltend anliegt, und
- einen zweiten Bereich (56, 58) aufweisen, der niederhaltend an der Andruckeinrichtung anliegt,
die ersten Bereiche der Federschenkel im Ruhezustand mit Abstand (S) von der Andruckeinrichtung gehalten sind,
die Federschenkel von dem ersten Bereich (52, 54) zu dem zweiten Bereich (56, 58) hin zunächst nach radial außen verlaufen und
die Niederhaltefeder (28, 30) die beiden Stäbe (34, 36) des Niederhaltebügels (32) jeweils trogförmig umgibt, wobei die beiden ersten Bereiche (52, 54) der Federschenkel (44, 46) den jeweiligen Boden des Troges bilden,
**dadurch gekennzeichnet, daß**
der Trog nicht symmetrisch ist, indem die Wandhöhe (H1) des Troges auf der Seite des Mittelbereiches (42) jeweils in etwa dem Durchmesser des jeweiligen Stabes (34, 36) entspricht und die Wandhöhe (H2) des Troges auf der dem Mittelbereich (42) abgewandten Seite maximal halb so hoch ist.

2. Scheibenbremse nach Anspruch 1, **dadurch gekennzeichnet, daß** die zweiten Bereiche (56, 58) jeweils zumindest teilweise auf den den ersten Bereichen (52, 54) abgewandten Seiten der Öffnung (48, 50) liegen.

3. Scheibenbremse nach Anspruch 1 oder 2, **dadurch gekennzeichnet, daß** die Öffnungen (48, 50) länger sind als die Ansätze (35, 38).

4. Scheibenbremse nach einem der vorangehenden Ansprüche, **dadurch gekennzeichnet, daß** die Niederhaltefeder (28, 30) in eingebautem Zustand bezüglich der Andruckeinrichtung (22, 24) in Umfangsrichtung der Bremsscheibe (12) versetzt ist.

5. Niederhaltefeder einer Scheibenbremse nach einem der vorangehenden Ansprüche, wobei sie symmetrisch ausgestaltet ist und zwei Federschenkel (44, 46) sowie zwischen den beiden Federschenkeln einen Mittelbereich (42) aufweist, der sich in eingebautem Zustand nach radial außen zwischen zwei Stäbe (34, 36) eines Niederhaltebügels (32) erstreckt,
die beiden Federschenkel jeweils eine Öffnung (48, 50) aufweisen, in die sich in eingebautem Zustand je ein Ansatz (35, 38) an einer Andruckeinrichtung erstreckt,
die Federschenkel jeweils
- einen ersten Bereich (52, 54), an dem in eingebautem Zustand jeweils ein Stab des Niederhaltebügels niederhaltend anliegt, und
- einen zweiten Bereich (56, 58) aufweisen, der in eingebautem Zustand niederhaltend an der Andruckeinrichtung anliegt,
die ersten Bereiche der Federschenkel eingebaut im Ruhezustand mit Abstand von der Andruckeinrichtung gehalten sind,
die Federschenkel von dem ersten Bereich (52, 54) zu dem zweiten Bereich (56, 58) hin zunächst nach radial außen verlaufen,
die Niederhaltefeder in eingebautem Zustand die beiden Stäbe (34, 36) des Niederhaltebügels (32) jeweils trogförmig umgibt, wobei die beiden ersten Bereiche (52, 54) der Federschenkel (44, 46) den jeweiligen Boden des Troges bilden, **dadurch gekennzeichnet daß** der Trog nicht symmetrisch ist, indem die Wandhöhe (H1) des Troges auf der Seite des Mittelbereiches (42) jeweils in etwa dem Durchmesser des jeweiligen Stabes (34, 36) entspricht und die Wandhöhe (H2) des Troges auf der dem Mittelbereich (42) abgewandten Seite maximal halb so hoch ist.

6. Niederhaltefeder nach Anspruch 5, **dadurch gekennzeichnet, daß** die zweiten Bereiche (56, 58) jeweils zumindest teilweise auf den den ersten Bereichen (52, 54) abgewandten Seiten der Öffnung (48, 50) liegen.

7. Niederhaltefeder nach Anspruch 5 oder 6, **dadurch gekennzeichnet, daß** die Öffnungen (48, 50) länger sind als die Ansätze (35, 38).

## Claims

1. Disc brake, in particular for commercial vehicles, having
a pressing device (22, 24) which is pressed against a brake disc (12) for braking purposes,
a hold-down spring (28, 30) in the form of a leaf spring which holds down the pressing device, and
a hold-down bracket (32) which has two rods (34, 36) and prestresses the hold-down spring against the pressing device,
the hold-down spring
- being of symmetrical configuration with regard to its transverse plane and having two spring limbs (44, 46) and a centre region (42) between the two spring limbs, which centre region (42) extends radially to the outside (in a positively locking manner) between the two rods of the hold-down bracket,
- the two spring limbs having in each case one opening (48, 50), into which in each case one projection (35, 38) on the pressing device extends,
- the spring limbs in each case having
- a first region (52, 54), against which in each case one rod of the hold-down bracket bears such that it holds it down, and
- a second region (56, 58) which bears against the pressing device such that it holds it down, the first regions of the spring limbs being held at a spacing (S) from the pressing device in the rest state, the springs limbs first of all running radially to the outside from the first region (52, 54) towards the second region (56, 58), and
the hold-down spring (28, 30) surrounding the two rods (34, 36) of the hold-down bracket (32) in each case in a trough-like manner, the two first regions (52, 54) of the spring limbs (44, 46) forming the respective bottom of the trough,
**characterized in that**
the trough is not symmetrical, by the wall height (H1) of the trough on the side of the centre region (42) corresponding in each case approximately to the diameter of the respective rod (34, 36), and the wall height (H2) of the trough on the side which faces away from the centre region (42) being at most half as high.

2. Disc brake according to Claim 1, **characterized in that** the second regions (56, 58) lie in each case at least partially on the sides of the opening (48, 50) which face away from the first regions (52, 54).

3. Disc brake according to Claim 1 or 2, **characterized in that** the openings (48, 50) are longer than the projections (35, 38).

4. Disc brake according to one of the preceding claims, **characterized in that**, in the installed state, the hold-down spring (28, 30) is offset in the circumferential direction of the brake disc (12) with regard to the pressing device (22, 24).

5. Hold-down spring of a disc brake according to one of the preceding claims,
the said hold-down spring being of symmetrical configuration and having two spring limbs (44, 46) and a centre region (42) between the two spring limbs, which centre region (42) extends radially to the outside in the installed state between two rods (34, 36) of a hold-down bracket (32),
the two spring limbs having in each case one opening (48, 50), into which in each case one projection (35, 38) on a pressing device extends in the installed state,
the spring limbs in each case having
- a first region (52, 54), against which, in the installed state, in each case one rod of the hold-down bracket bears such that it holds it down, and
- a second region (56, 58) which, in the installed state, bears against the pressing device such that it holds it down,
the first regions of the spring limbs being held, when installed, at a spacing from the pressing device in the rest state,
the spring limbs running first of all radially to the outside from the first region (52, 54) towards the second region (56, 58),
the hold-down spring surrounding the two rods (34, 36) of the hold-down bracket (32) in each case in a trough-like manner in the installed state, the two first regions (52, 54) of the spring limbs (44, 46) forming the respective bottom of the trough, **characterized in that** the trough is not symmetrical, by the wall height (H1) of the trough on the side of the centre region (42) corresponding in each case approximately to the diameter of the respective rod (34, 36), and the wall height (H2) of the trough on the side which faces away from the centre region (42) being at most half as high.

6. Hold-down spring according to Claim 5, **characterized in that** the second regions (56, 58) lie in each case at least partially on the sides of the opening (48, 50) which face away from the first regions (52, 54).

7. Hold-down spring according to Claim 5 or 6, **characterized in that** the openings (48, 50) are longer than the projections (35, 38).

## Revendications

1. Frein à disque, en particulier pour des véhicules utilitaires, avec
un dispositif de pression (22, 24), que l'on presse contre le disque de frein (12) pour le freinage,
un ressort de retenue (28, 30) en forme de ressort à lame, qui retient le dispositif de pression, et
un étrier de retenue (32) présentant deux barres (34, 36), qui précontraint le ressort de retenue contre le dispositif de pression, dans lequel
le ressort de retenue
- est de forme symétrique par rapport à son plan transversal et présente deux branches de ressort (44, 46) ainsi qu'entre les deux branches de ressort une région médiane (42), qui s'étend radialement vers l'extérieur (par emboîtement) entre les deux barres de l'étrier de retenue,
- les deux branches de ressort présentent chacune une ouverture (48, 50), dans laquelle s'étend respectivement un ergot (35, 38) formé sur le dispositif de pression,
- les branches de ressort présentent respectivement
- une première région (52, 54), sur laquelle s'applique respectivement en position de retenue une barre de l'étrier de retenue, et
- une deuxième région (56, 58), qui s'applique en position de retenue sur le dispositif de pression,
les premières régions des branches de ressort sont maintenues dans l'état de repos à une distance (S) du dispositif de pression,
les branches de ressort s'étendent d'abord radialement vers l'extérieur de la première région (52, 54) en direction de la deuxième région (56, 58) et
le ressort de retenue (28, 30) entoure les deux barres (34, 36) de l'étrier de retenue (32) respectivement en forme d'auge, dans lequel les deux premières régions (52, 54) des branches de ressort (44, 46) forment le fond respectif de l'auge,
**caractérisé en ce que**
l'auge n'est pas symétrique, du fait que la hauteur de paroi (H1) de l'auge sur le côté de la région médiane (42) correspond respectivement environ au diamètre de la barre respective (34, 36) et la hauteur de paroi (H2) de l'auge sur le côté opposé à la région médiane (42) est au maximum à moitié aussi haute.

2. Frein à disque selon la revendication 1, **caractérisé en ce que** les deuxièmes régions (56, 58) s'appliquent respectivement au moins en partie sur les côtés de l'ouverture (48, 50) opposés aux premières régions (52, 54).

3. Frein à disque selon la revendication 1 ou 2, **caractérisé en ce que** les ouvertures (48, 50) sont plus longues que les ergots (35, 38).

4. Frein à disque selon l'une quelconque des revendications précédentes, **caractérisé en ce que** le ressort de retenue (28, 30) dans l'état monté est décalé dans la direction périphérique du disque de frein (12) par rapport au dispositif de pression (22, 24) .

5. Ressort de retenue d'un frein à disque selon l'une quelconque des revendications précédentes, dans lequel
il est de forme symétrique et présente deux branches de ressort (44, 46) ainsi qu'entre les deux branches de ressort une région médiane (42), qui s'étend dans l'état monté radialement vers l'extérieur entre deux barres (34, 36) d'un étrier de retenue (32),
les deux branches de ressort présentent chacune une ouverture (48, 50), dans laquelle s'étend dans l'état monté respectivement un ergot (35, 38) formé sur un dispositif de pression,
les branches de ressort présentent respectivement
- une première région (52, 54), sur laquelle s'applique respectivement dans l'état monté en position de retenue une barre de l'étrier de retenue, et
- une deuxième région (56, 58), qui s'applique dans l'état monté en position de retenue sur le dispositif de pression,
les premières régions des branches de ressort montées sont maintenues dans l'état de repos à distance du dispositif de pression,
les branches de ressort s'étendent d'abord radialement vers l'extérieur de la première région (52, 54) en direction de la deuxième région (56, 58),
le ressort de retenue entoure dans l'état monté les deux barres (34, 36) de l'étrier de retenue (32) respectivement en forme d'auge, dans lequel les deux premières régions (52, 54) des branches de ressort (44, 46) forment le fond respectif de l'auge,
**caractérisé en ce que**
l'auge n'est pas symétrique, du fait que la hauteur de paroi (H1) de l'auge sur le côté de la région médiane (42) correspond respectivement environ au diamètre de la barre respective (34, 36) et la hauteur de paroi (H2) de l'auge sur le côté opposé à la région médiane (42) est au maximum à moitié aussi haute.

6. Ressort de retenue selon la revendication 5, **caractérisé en ce que** les deuxièmes régions (56, 58) s'appliquent respectivement au moins en partie sur les côtés de l'ouverture (48, 50) opposés aux premières régions (52, 54).

7. Ressort de retenue selon la revendication 5 ou 6, **caractérisé en ce que** les ouvertures (48, 50) sont plus longues que les ergots (35, 38).
